# EUROPÄISCHE PATENTSCHRIFT

(11) **EP 2 690 036 B1**
(45) Veröffentlichungstag und Bekanntmachung des Hinweises auf die Patenterteilung: **15.07.2015**
(21) Anmeldenummer: 13177619.7
(22) Anmeldetag: 23.07.2013
(51) Int. Cl.: B65D 90/04, B29C 63/34

(54) **Verfahren zum mannlosen Einbauen einer Tankinnenauskleidung in einen Tank und Tankinnenauskleidung**
Method for the unmanned installation of a tank lining in a tank and tank lining
Procédé d'intégration sans opérateur d'un habillage intérieur de citerne dans une citerne et habillage intérieur de citerne

(30) Priorität: 25.07.2012 DE 202012007222 U; 30.11.2012 DE 202012011477 U; 25.03.2013 DE 202013002824 U
(43) Veröffentlichungstag der Anmeldung: 29.01.2014
(73) Patentinhaber: von Bornstädt, Jörn, 14195 Berlin (DE)
(72) Erfinder: Von Bornstädt, Jörn, 14195 Berlin (DE)
(74) Vertreter: Bittner, Thomas L.

(56) Entgegenhaltungen:
- EP-A1- 2 390 085
- DE-A1- 3 320 867
- US-A- 5 072 623

## Beschreibung

Die Erfindung betrifft ein Verfahren zum mannlosen Einbauen einer Tankinnenauskleidung in einen Tank sowie eine Tankinnenauskleidung.

### Hintergrund

Es besteht die Gefahr bei der Lagerung von wassergefährdenden Substanzen in Tanks, dass eine Wasser gefährdende Substanz in die Umwelt gelangt. Dies kann erhebliche finanzielle Folgen für den Betreiber haben. Durch den Einbau einer Leckschutzauskleidung wird das Risiko minimiert. Durch die Leckschutzauskleidung mit einer flexiblen Tankinnenhülle wird eine zweite Tankwand hergestellt. Zusammen mit der Stahltankwand besteht dann ein doppelwandiges System. Ein doppelwandiges System ist z.B. in Deutschland für viele Tankarten gesetzlich vorgeschrieben. Durch die Leckschutzauskleidung können also bestehende Tanks saniert werden. Ohne Einbau einer Leckschutzauskleidung wäre unter Umständen nur noch der Austausch des Tanks möglich. Bei unterirdischen Tanks heißt dies, dass diese ausgegraben werden müssen. Dies kann bei Tankstellen dazu führen, dass der Betrieb der Tankstelle eingeschränkt ist und es kann sogar sein, dass der Tank unter bestehenden Gebäuden steht und somit kaum noch wirtschaftlich vertretbar auszugraben ist.

Bisher ist der Stand der Technik, dass eine Leckschutzauskleidung in einen Tank eingebaut wird, wofür der Tank von mindestens einem Monteur betreten werden muss. Dies bedeutet ein Risiko für den Monteur. Durch die Bildung explosiver Gase ist es schon zu Explosionen mit tödlichen Unfällen gekommen.

Daher ist es ein Bestreben der großen Mineralölgesellschaften, dass die Tanks nicht mehr von Menschen betreten werden. In einigen Ländern haben Firmen bereits intern ein Verbot erlassen, dass ihre Angestellten bzw. Subunternehmer diese Tanks betreten.

Die Dokumente DE 33 20 867 A1 und EP 2 390 085 A1 beschreiben jeweils eine Verfahren zum Auskleiden eines Tanks mit einer vorkonfektionierten Innenverkleidung. Die Innenverkleidung wird in den Tank eingeführt, ausgerichtet und anschließend aufgeblasen.

### Zusammenfassung

Aufgabe ist es, verbesserte Technologien für den Einbau einer Tankauskleidung in einen Tank anzugeben, wobei ein Betreten des Tanks durch einen Monteur nicht erforderlich ist. Das Gefahrenpotenzial für den Monteur beim Auskleiden eines Tanks soll eliminiert oder zumindest erheblich reduziert werden.

Diese Aufgabe wird durch das Verfahren nach Anspruch 1 sowie die Tankinnenauskleidung nach dem unabhängigen Anspruch 9 gelöst. Vorteilhafte Ausgestaltungen sind Gegenstand von abhängigen Ansprüchen.

Nach einem Aspekt ist ein Verfahren zum mannlosen Einbauen einer Tankinnenauskleidung in einen Tank bereitgestellt. Das Verfahren umfasst folgende Schritte: Es wird ein Tank bereitgestellt, eine einen Innenbereich umgebende Tankwand mit einer Tanköffnung aufweist. Des Weiteren wird die Tankinnenauskleidung bereitgestellt, die eine Innenhülle und eine Zwischenlage aufweist. Anschließend wird der Innenbereich des Tanks ausgekleidet. Das Auskleiden umfasst ein Einführen der Tankinnenauskleidung in den Innenbereich des Tanks durch die Tanköffnung. Weiterhin umfasst das Auskleiden ein Entfalten der Tankinnenauskleidung im Innenbereich des Tanks. Im ausgekleideten Zustand ist die Zwischenlage zwischen der Innenhülle und der Tankwand angeordnet und die Zwischenlage liegt zumindest abschnittsweise an der Tankwand an. Die Tankinnenauskleidung wird beim Auskleiden mit Unterstützung einer Einbauhilfseinrichtung in einem nicht entfalteten oder wenigstens teilweise entfalteten Zustand positioniert und / oder ausgerichtet. Die Einbauhilfseinrichtung kann zumindest teilweise im Innenbereich des Tanks angeordnet sein.

Nach einem weiteren Aspekt ist eine Tankinnenauskleidung bereitgestellt. Die Tankinnenauskleidung weist eine Innenhülle und eine die Innenhülle umgebende Zwischenlage auf. Des Weiteren weist die Tankinnenauskleidung eine Befestigungseinrichtung für eine Zugeinrichtung auf.

Durch den Einsatz der Einbauhilfseinrichtung ist ein Betreten des Innenbereichs durch einen Monteur beim Einbau der Tankinnenauskleidung nicht erforderlich. Das Einführen der Tankinnenauskleidung in den Innenbereich des Tanks kann beispielsweise ebenfalls mit Unterstützung der Einbauhilfseinrichtung ausgeführt werden. Es kann vorgesehen sein, dass das Einführen der Tankinnenauskleidung und das Positionieren und / oder Ausrichten derselben in einem gemeinsamen Schritt ausgeführt werden. Das Positionieren kann ein Anordnen der Tankinnenauskleidung an einer bestimmten Position innerhalb des Innenbereichs umfassen. Das Ausrichten kann ein Anordnen der Tankinnenauskleidung im Innenbereich des Tanks mit einer bestimmten Ausrichtung umfassen, beispielsweise entlang einer Längsrichtung oder Querrichtung des Tanks.

Beispielsweise kann bei einem Tank mit zwei Domen auf beiden Seiten des Tanks die Tankinnenhülle mit alle erforderlichen Anbauteilen über eine Zugvorrichtung von einem Dom zum zweiten Dom gezogen werden und auf dem Boden ausgerichtet werden.

Es kann vorgesehen sein, dass die Einbauhilfseinrichtung von außerhalb des Tanks bedient wird, beispielsweise im Bereich der Tanköffnung.

Die Tankinnenauskleidung kann beispielsweise mittels Füllen der Innenhülle mit einem Fluid entfaltet werden. Die Innenhülle kann beispielsweise mit Luft oder einem anderen Gas gefüllt werden. Die Innenhülle kann aus einer Folie oder einem beschichteten Gewebe bestehen. Sie kann mit Durchführungstüllen gebildet sein.

Als Zwischenlage kann ein Vlies oder andere Materialien verwendet werden, die dem Zweck des Vlieses gleichkommen. Alternativ kann die Zwischenlage in die Innenhülle integriert sein, beispielsweise durch Noppen an der Seite der Innenhülle, die nach dem Einbau der Tankwand zugewandt ist.

Es kann vorgesehen sein, dass die Tankinnenauskleidung vorkonfektioniert ist. Die Innenhülle und / oder die Zwischenlage können auf die Maße eines Tanks zugeschnitten sein, in den sie eingebaut werden. Eine Konfektionierung der Innenhülle und / oder der Zwischenlage ermöglicht eine passgenaue Anlage der Tankinnenauskleidung an die Tankwand im vollständig entfalteten Zustand.

Die Tankinnenauskleidung kann darüber hinaus eine schon vor dem Einbau befestigte Vakuumsaugleitung aufweisen, die nach dem Einbau zwischen der Zwischenlage und der Tankwand angeordnet ist. Die Vakuumsaugleitung, beispielsweise ein Schlauch, kann aus einem flexiblen Material gebildet sein. Des Weiteren kann die Tankinnenauskleidung eine Prallschutzmatte aufweisen. Alternativ kann vorgesehen sein, die Prallschutzmatte in den Tank einzubauen, bevor die Tankinnenauskleidung in den Innenbereich des Tanks eingeführt wird. Alternativ oder ergänzend können die Innenhülle und / oder die Zwischenlage zumindest abschnittsweise verstärkt sein. Beispielsweise kann die Tankinnenauskleidung eine weitere und / oder eine verstärkte Zwischenlage aufweisen, die zumindest abschnittsweise auf der Zwischenlage angeordnet sind. Hiermit können ausgewählte Stellen im Tank, beispielsweise Verstärkungsstreben oder beschädigte Bereiche, zusätzlich abgedeckt werden, wodurch das Auspolstern von Streben entbehrlich wird.

Die Tankinnenauskleidung kann als Rolle bereitgestellt werden, die nach dem Ausrichten im Innenbereich des Tanks ausgerollt wird. Beispielsweise kann die Tankinnenauskleidung quer zusammen gerollt werden und mit der Einbauhilfseinrichtung, beispielsweise einem Seil, in den Tank eingeführt werden. Nach dem Ausrichten mittels der Einbauhilfseinrichtung liegt die Rolle quer im Tank. Alternativ kann die Rolle aufgrund ihrer Eigensteifigkeit ohne das Seil in den Tankinnenraum hinein geschoben werden. Beim Befüllen der Innenhülle rollt sich die Rolle nach und nach aus. Anschließend wird der Innenbereich des Tanks ausgefüllt, sodass die Tankinnenauskleidung zumindest abschnittsweise an der Innenseite des Tanks zur Anlage kommt.

Alternativ oder ergänzend kann die Tankinnenauskleidung in einem gefalteten Zustand bereitgestellt werden. Die Faltung kann quer und / oder längs erfolgen. Die Faltung ist vorzugsweise derart, dass ein Ausdehnen der Innenhülle und der Zwischenlage beim Befüllen der Innenhülle mit dem Fluid nicht behindert wird. Vorteilhafterweise ist die Faltung derart, dass sich die Tankinnenauskleidung beim Befüllen der Innenhülle mit dem Fluid gleichmäßig ausdehnt. Die gerollte und / oder gefaltete Tankinnenauskleidung kann mit einer Befestigungseinrichtung zusammen gehalten werden, beispielsweise einem oder mehreren Gurten. Die Befestigungseinrichtung kann lösbar gebildet sein.

Es kann vorgesehen sein, dass die Tankinnenauskleidung von einer Schutzhülle umgeben ist. Vorteilhafterweise ist die Tankinnenauskleidung vollständig von der Schutzhülle umschlossen. Es kann vorgesehen sein, die Schutzhülle zu evakuieren, derart, dass sich die Abmaße der umhüllten Tankinnenauskleidung reduzieren. Die Tankinnenauskleidung und / oder die Schutzhülle können eine oder mehrere Halteelemente aufweisen, beispielsweise Ösen, Haken und / oder Karabinerhaken. Die Halteelemente bieten Angriffspunkte für ein Werkzeug, das zum Bewegen, Einführen und Ausrichten der Tankinnenhülle verwendet wird. Des Weiteren können die Tankinnenauskleidung und / oder die Schutzhülle Markierungen aufweisen, die das Ausrichten erleichtern.

Nach dem vollständigen Befüllen der Innenhülle kann vorgesehen sein, den Bereich zwischen der Innenhülle und der Tankwand zu evakuieren. Es kann vorgesehen sein, eine Leckanzeigeeinrichtung, beispielsweise ein Druckmessgerät, mit dem evakuierten Bereich zu koppeln.

Beispielsweise kann ein Kragen, z.B. aus einem Vliesmaterial, bereitgestellt werden, der in dem Bereich der Innenhülle angeordnet wird, welcher nach dem Befüllen im Bereich der Tanköffnung anliegt. Der Kragen schützt die Innenhülle vor Beschädigungen.

Der Tank kann mit mehr als einer Tanköffnung gebildet sein, beispielsweise mit zwei Tanköffnungen. Die Tanköffnungen können an gegenüberliegenden Enden des Tanks gebildet sein.

Die Einbauhilfseinrichtung kann eine oder mehrere Komponenten aufweisen, die nachfolgend noch näher erläutert werden.

Nach einer Ausführungsform ist vorgesehen, dass die Tankinnenauskleidung mittels einer Zugvorrichtung gezogen wird. Beispielsweise kann ein Seil wenigstens teilweise im Innenbereich des Tanks angeordnet sein, mit dem die Tankinnenausrichtung bewegt wird. Es kann vorgesehen sein, dass vor dem Auskleiden die Zugvorrichtung im Innenbereich des Tanks angeordnet wird. Anschließend wird die Tankinnenauskleidung mittels der Zugvorrichtung in den Innenbereich des Tanks gezogen. Die Zugvorrichtung kann mit einer Magneteinrichtung, beispielsweise einem Elektromagneten, oder einer pneumatischen Vorrichtung gebildet sein, mittels der die Zugvorrichtung an einer Innenseite der Tankwand befestigt wird. Die pneumatische Vorrichtung kann beispielsweise mit Vakuum betrieben werden. Beispielsweise ist an einem Ende der Tankinnenauskleidung eine Befestigungsvorrichtung für ein Seil oder einen Gurt gebildet. Die Zugvorrichtung zieht ein Seil, das an der Befestigungsvorrichtung befestigt ist. Hierdurch wird die Tankinnenauskleidung in den Innenbereich des Tanks eingeführt. Alternativ kann die Zugvorrichtung mit einer Umlenkvorrichtung gebildet sein. Das Seil verläuft von der Befestigungsvorrichtung zu der Umlenkvorrichtung und von dort durch die Tanköffnung aus dem Tank hinaus. Mit dem außen befindlichen Ende des Seils kann dann die Tankinnenauskleidung in den Tank gezogen werden. Das Seil kann beispielsweise manuell oder mittels einer Antriebseinrichtung gezogen werden. Es kann vorgesehen sein, dass Seil durch einen Flaschenzug zu führen, um die zum Ziehen benötigte Kraft zu reduzieren. Die Zugvorrichtung kann bei einem länglichen, beispielsweise zylinderförmigen, Tank an einer Stirnseite des Innenbereichs des Tanks angeordnet werden. Vorzugsweise ist die Zugvorrichtung an der Stirnseite des Tanks angeordnet, die der Tanköffnung gegenüberliegt. In diesem Fall erfolgt mit dem Einführen der Tankinnenauskleidung zeitgleich ein Ausrichten entlang der Längsrichtung des Tanks. Die Zugvorrichtung kann mittels einer Positioniereinrichtung im Innenbereich des Tanks angeordnet werden, beispielsweise einer Stange. Die Positioniereinrichtung kann mehrteilig sein, wobei mehrere Elemente der Positioniereinrichtung teleskopartig miteinander verbunden sein können. Es können auch mehrere Zugvorrichtungen vorgesehen sein, die im Innenbereich des Tanks angeordnet werden. Bei einem länglichen Tank werden vorteilhafterweise zwei Zugvorrichtungen an gegenüberliegenden Enden des Tanks angeordnet. Die Anzahl und die Anordnung können an die Größe des Tanks angepasst werden.

Gemäß einer Weiterbildung der wird vor dem Auskleiden ein Führungselement im Innenbereich des Tanks angeordnet. Die Tankinnenauskleidung wird beim Auskleiden des Tanks entlang und/oder mittels des Führungselements positioniert und / oder ausgerichtet. Das Positionieren und / oder Ausrichten der Tankinnenauskleidung kann beispielsweise mit einer oder mehreren Zugvorrichtungen erfolgen. Alternativ oder ergänzend kann die Tankinnenauskleidung mittels einer Schubvorrichtung entlang des Führungselements geschoben werden. Es kann vorgesehen sein, dass das Führungselement am Boden des Innenbereichs angeordnet wird. Das Führungselement kann ein aufblasbares Element sein, beispielsweise aus Folie, beschichteten Gewebe oder Gummi, das mit Luft oder einem anderen Fluid gefüllt wird. Das Führungselement kann beispielweise eingerollt durch die Tanköffnung in den Innenbereich des Tanks eingebracht werden. Dann kann es mit Leinen ausgerichtet und aufgeblassen werden, sodass es sich entlang der Längsrichtung des Tanks ausrollt. Es kann dann wieder mit Leinen ausgerichtet werden. Das Führungselement ist relativ leicht und kann im Gegensatz zur Tankinnenauskleidung somit leichter in der Lage korrigiert werden. Es kann vorgesehen sein, dass an dem Führungselement die Zugvorrichtung gebildet ist, wobei an der Zugvorrichtung beispielsweise eine Umlenkvorrichtung gebildet sein kann. Das Führungselement ist beispielsweise aus vier Luftschläuchen gebildet, die unterschiedlich dick sind. Die Tankinnenauskleidung kann mittig auf den tiefer gelegenen Luftschläuchen zum Kopf des Tanks über die Umlenkrollen gezogen werden. Die Luft kann nach dem Positionieren und ggf. dem Aufblasen der Tankinnenhülleneinheit wieder aus dem Führungselement heraus gelassen werden. Alternativ kann vorgesehen sein, die Tankinnenauskleidung vor dem Einführen in den Innenbereich auf dem Führungselement anzuordnen. Anschließend wird die Tankinnenauskleidung auf dem Führungselement (also mit diesem zusammen) in den Tank eingeführt.

Es kann vorgesehen sein, dass das Führungselement mehrteilig gebildet ist. Mehrere Teile des Führungselements können lösbar miteinander verbunden sein. Beispielsweise kann das Führungselement aus zwei Teilen bestehen, die längs zum Tank nebeneinander angeordnet sind. Die beiden Teile können jeweils an einer Seite Schlaufen aufweisen, die versetzt zueinander angeordnet sind. Zum Verbinden der beiden Teile wird ein Seil durch die Schlaufen geführt. Nachdem die Tankinnenauskleidung auf dem Führungselement ausgebreitet ist, kann die Verbindung der beiden Teile gelöst werden, indem das Seil aus den Schlaufen gezogen wird. Die Tankinnenauskleidung fällt dann zwischen die beiden Teile auf den Boden des Tanks. Die beiden Teile können anschließend aus dem Innenbereich des Tanks entfernt werden.

Nach einer anderen Weiterbildung ist vorgesehen, dass die Zugvorrichtung und / oder das Führungselement aus dem Innenbereich des Tanks entfernt werden, bevor die Tankinnenauskleidung vollständig entfaltet wird. Beim Entfernen des Führungselements kann vorgesehen sein, auf die auf dem Führungselement ausgebreitete Tankinnenauskleidung eine Kraft in Gegenrichtung zur Bewegung des Führungselements auszuüben, beispielsweise eine Zug- oder Schubkraft. Hierdurch wird ein Verrutschen der Tankinnenauskleidung vermieden. Des Weiteren kann das Führungselement zu einer Seite hin umgeklappt werden, wenn die Tankinnenauskleidung hierauf angeordnet ist. Die Tankinnenauskleidung fällt dann auf den Boden des Tanks neben das Führungselement.

Eine andere Ausführungsform sieht vor, dass die Tankinnenauskleidung mit einem oder mehreren Schläuchen gebildet ist, und der oder die Schläuche mit einem Fluid, insbesondere einem Gas wie beispielsweise Luft, befüllt werden, nachdem die Tankinnenauskleidung in den Innenbereich des Tanks eingeführt wurde, um das Positionieren und / oder Ausrichten der Tankinnenauskleidung zu unterstützen. Mit dem Befüllen der Schläuche kann die Tankinnenauskleidung beispielsweise ausgerollt und / oder entfaltet werden.

Eine andere Fortbildung sieht vor, dass vor dem Auskleiden das Führungselement derart im Innenbereich des Tanks angeordnet wird, dass das Führungselement eine Führungsebene von der Tanköffnung hin zu einer der Tanköffnung gegenüberliegenden Seite des Innenbereichs bildet, wobei die Tankinnenauskleidung entlang der Führungsebene in den Innenbereich des Tanks eingeführt wird. Das Führungselement kann eine Größe haben, sodass es von der Tanköffnung bis zum der Tanköffnung gegenüberliegenden Ende des Innenbereichs des Tanks reicht. Die Tankinnenauskleidung kann entlang der Führungsebene in den Innenbereich hinein rutschen. Alternativ oder ergänzend kann vorgesehen sein, dass die Tankinnenauskleidung mittels der Schubvorrichtung entlang der vom Führungselement gebildeten Führungsebene geschoben wird. Des Weiteren kann die Tankinnenauskleidung die Führungsebene hinab gezogen werden, beispielsweise mittels der bereits beschriebenen Zugvorrichtung, die an der Führungsebene oder am Tank angebracht sein kann.

Gemäß einer weiteren Ausführungsform sind an einer Oberseite des Führungselements angetriebene Rollen gebildet, die eine Bewegung der Tankinnenauskleidung entlang der Oberseite des Führungselements unterstützen. Die Rollen sind mit einem Antrieb gebildet, beispielsweise einem Seilzug, einer Hydraulik, einer Pneumatik oder einem Motor.

### Beschreibung beispielhafter Ausführungsformen

Weitere Ausführungsformen werden im Folgenden unter Bezugnahme auf Figuren einer Zeichnung näher erläutert. Hierbei zeigen:

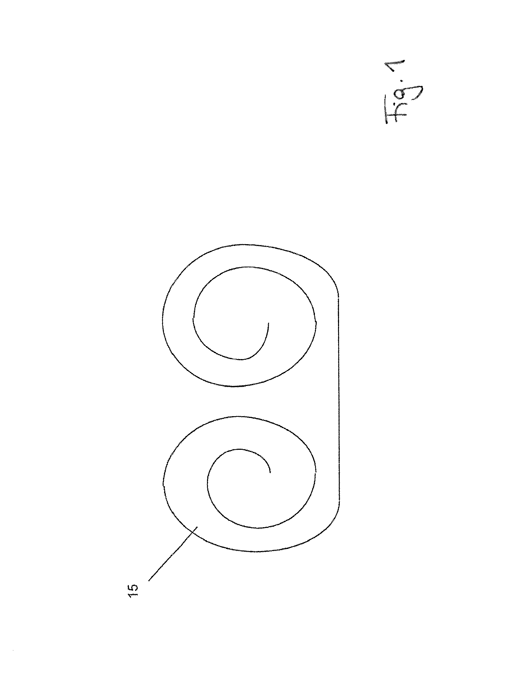

- Fig. 1: einen Querschnitt einer zusammengerollten Tankinnenauskleidung,
- Fig. 2: einen Querschnitt der zusammengerollten Tankinnenauskleidung mit einer Ummantelung,

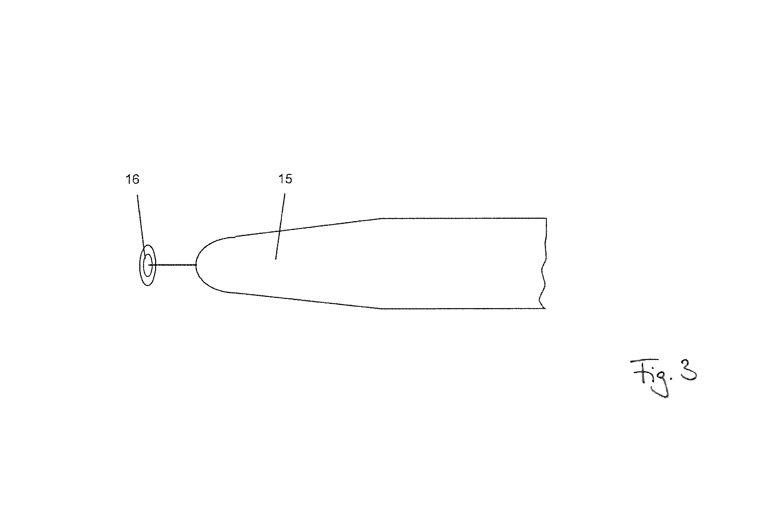

- Fig. 3: einen Querschnitt einer weiteren Tankinnenauskleidung mit einer Befestigungseinrichtung an der Spitze,

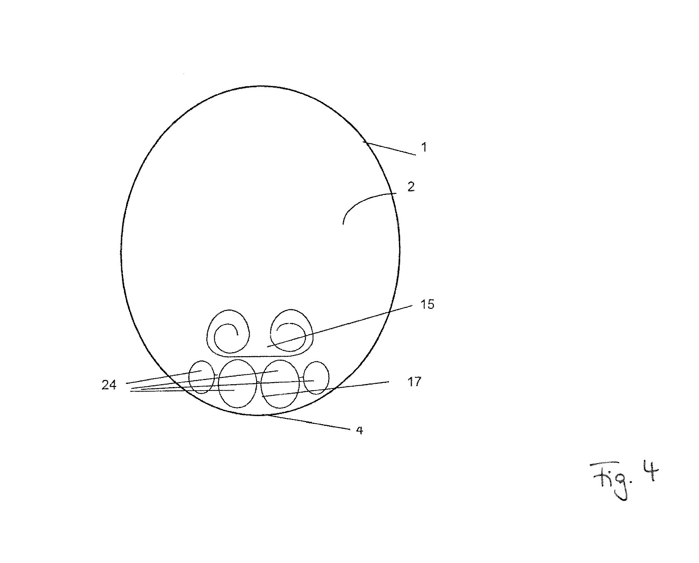

- Fig. 4: einen Querschnitt der Tankinnenauskleidung auf einem Montagekissen,
- Fig. 5: eine Diagonalansicht des gefüllten Montagekissens,

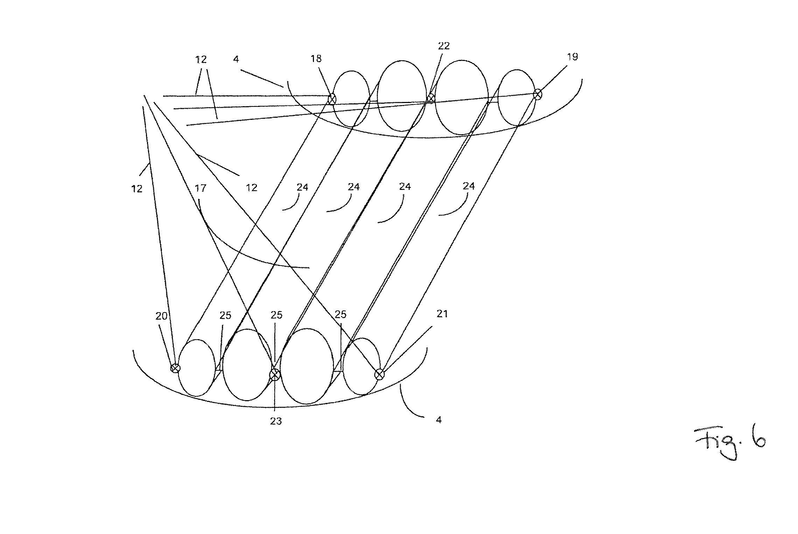

- Fig. 6: eine Diagonalansicht des gefüllten Montagekissens und Ösen,
- Fig. 7: eine schematische Darstellung des Einzugs der Tankinnenauskleidung über das Montagekissen mit einer Zugvorrichtung mit einer Umlenkvorrichtung an der dem Dom abgewandten Seite,
- Fig. 8: eine schematische Darstellung des Einzugs der Tankinnenauskleidung über das Montagekissen mit einer Zugvorrichtungen mit Umlenkvorrichtung jeweils an beiden Enden des Montagekissens,
- Fig. 9: eine schematische Darstellung des Einzugs der Tankinnenauskleidung mittels eines Magneten, der an der dem Dom gegenüberliegenden Stirnseite angeordnet ist,

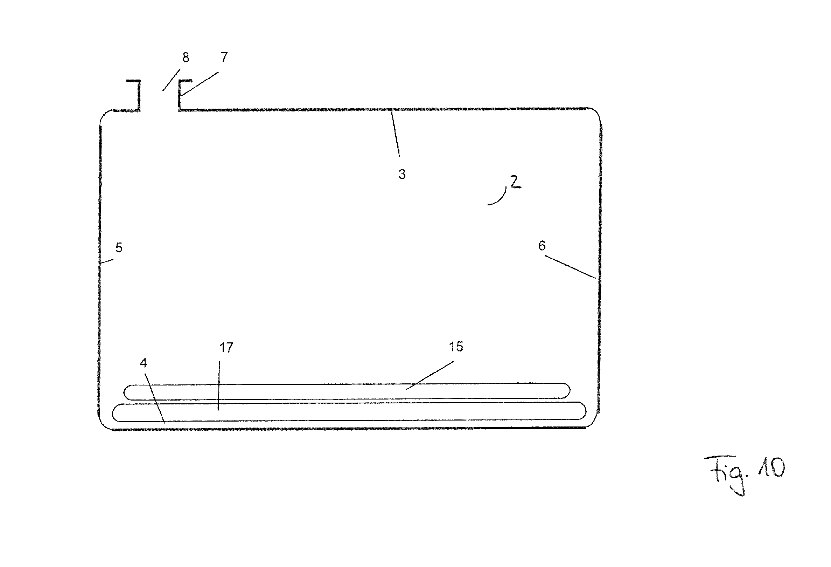

- Fig. 10: ein Querschnitt der Tankinnenauskleidung, die auf dem Montagekissen in den Tank gezogen wurde,
- Fig. 11: eine Montagerutsche mit der Tankinnenauskleidung,

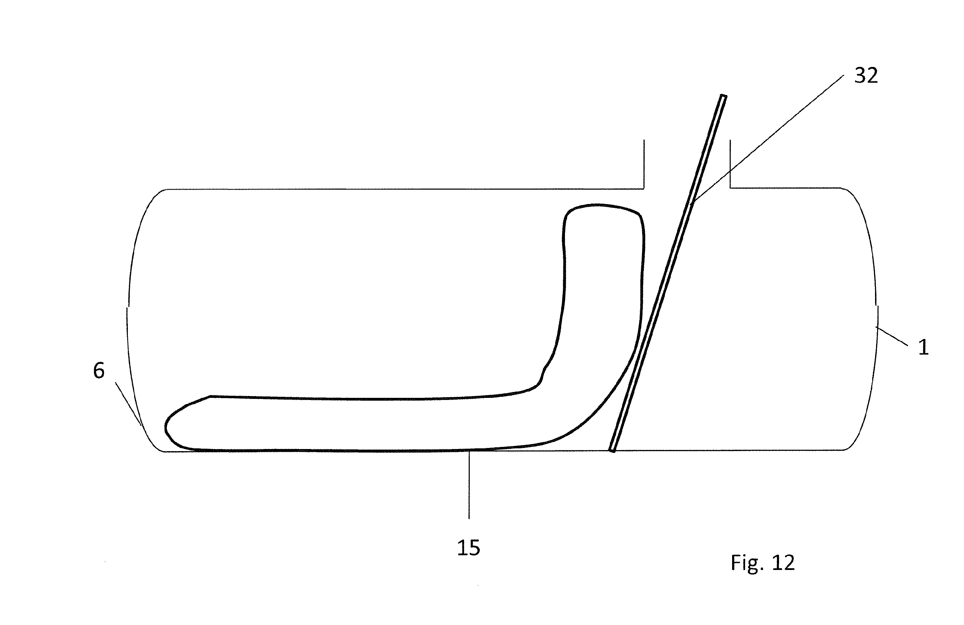

- Fig. 12: die Montagerutsche mit abgelegter Tankinnenauskleidung,

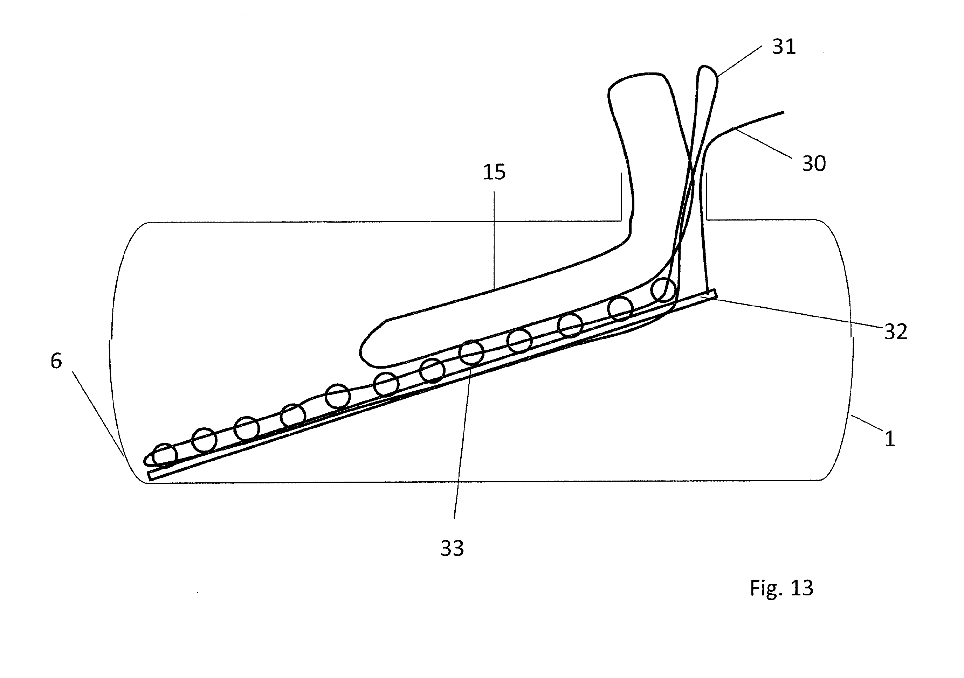

- Fig. 13: eine weitere Montagerutsche mit Rollen,
- Fig. 14: eine V-förmige Montagerutsche,
- Fig. 15: eine Montagerutsche zum horizontalen Abklappen,
- Fig. 16: eine Montagerutsche zum Abklappen mit einem Winkel von 45°,
- Fig. 17: die Tankinnenauskleidung zwischen zwei Teilen eines mehrteiligen Montagekissen,
- Fig. 18: ein Öffnungsmechanismus für das Montagekissen bzw. die Montagerutsche,
- Fig. 19: eine schematische Darstellung der Tankinnenauskleidung,
- Fig. 20: eine schematische Darstellung, wobei Innenhülle und Vlies quer zusammen gelegt sind,
- Fig. 21: eine schematische Darstellung eines Kragens zum Schutz des Doms und
- Fig. 22: eine schematische Darstellung eines zusammengerollten Montagekissens.

Die Komponenten einer Tankinnenauskleidung umfassen eine speziell für einen Tank 1 angefertigte Tankinnenhülle 13 und eine speziell für den Tank 1 angefertigte Luft leitende Zwischenlage 14. Die Zwischenlage 14 kann auch als Überwachungsraum dienen, damit Beschädigungen der Tankinnenwand 3 oder der Tankinnenhülle 13 über ein dazwischen bestehendes Vakuum erkannt werden können. Darüber hinaus kann die Tankinnenauskleidung 15 eine Saugleitung und eine Prallschutzmatte 34 umfassen. Die Tankinnenauskleidung 15 wird in den Tank 1 eingebracht und ausgerichtet. Anschließend wird die Tankinnenhülle 13 mit Luft gefüllt, bis die Zwischenlage 14 zumindest abschnittsweise an der Tankinnenwand 3 anliegt. Im Anschluss daran wird zwischen dem Tank 1 und der Tankinnenhülle 13 ein Vakuum erzeugt, wodurch die Tankinnenauskleidung 15 weiter an die Tankwand gezogen wird. Die Zwischenlage 14 stellt somit einen Überwachungsraum zur Kontrolle der Dichtigkeit und Nutzbarkeit dar. Zur Sicherung in Gebrauchsstellung wird dieses Vakuum mittels eines Leckanzeigers ständig gehalten und überwacht. Leckagen im Tank oder in der Tankinnenhülle 13 werden angezeigt.

Zur mannlosen Einbringung der Tankinnenhülle 13, und der Zwischenlage 14 werden die Komponenten vor dem Einbau zu einer Rolle (Tankinnenauskleidung) zusammen gerollt. Dazu werden die Tankinnenhülle 13 und die Zwischenlage 14 schon vor dem Zusammenrollen durch Ineinanderstecken und ggfs. noch mittels Klettstreifen oder anderweitig miteinander verbunden. Je nach Zustand des Tanks 1 kann zum sicheren Einbau der Tankinnenauskleidung 15 diese mit einer dünnen Folie umhüllt werden, die beim Füllen der Tankinnenhülle 13 aufreißt und sich auf den Boden 4 des Tanks 1 legt. Danach wird das restliche Zubehör der Leckschutzauskleidung installiert.

Ungeachtet der Tankgröße ist der Dom 7 (Tanköffnung) in den Tank 1 in der Regel nicht größer als 60 cm im Durchmesser. Durch diese Öffnung muss die Tankinnenauskleidung 15, bestehend aus der Tankinnenhülle 13, der Zwischenlage 14 und gegebenenfalls der Saugleitung sowie gegebenenfalls weiteres Zubehör wie z. B. die Prallschutzmatte 34 in den Tank 1 eingebracht werden.

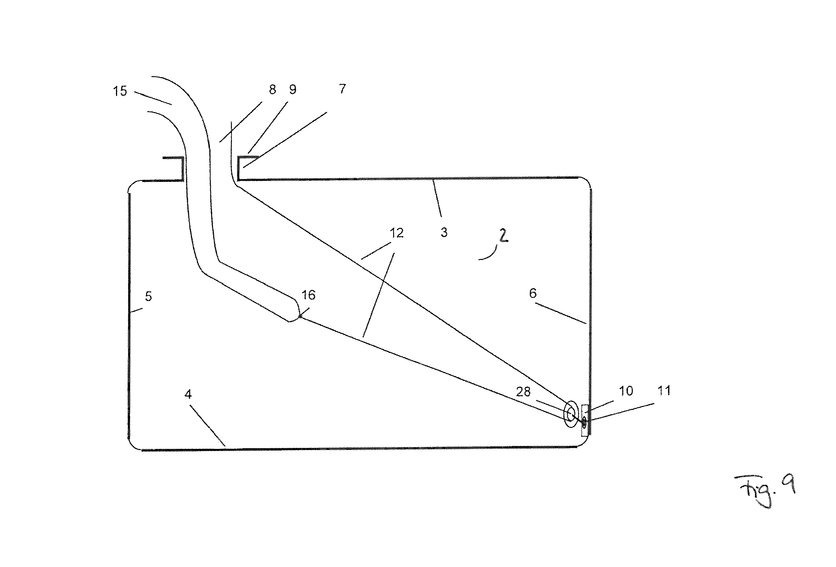

Eine Ausführungsform ist in Fig. 9 gezeigt. An der dem Dom 7 gegenüberliegenden Stirnseite 6 der Tankwand 3, im Bereich des Bodens 4 oder auch an einer höheren Stelle der Stirnseite, wird eine Durchschlaufmöglichkeit geschaffen, mit der die Tankinnenauskleidung 15 in den Tank 1 gezogen werden kann. Diese Durchschlaufmöglichkeit kann z.B. eine an einem Elektromagneten 10 befestigte Zugvorrichtung mit einer Umlenkvorrichtung 11 sein. Es kann auch z.B. bei Tankinnenhüllen mit einer größeren Länge von beispielsweise mehr als 5 Metern eine weitere Zugvorrichtung mit einer Umlenkvorrichtung erforderlich sein. Diese wird dann an der Stirnseite des Tanks auf der Seite des Doms angebracht. Der Magnet wird im Gebrauchszustand aktiviert und nach Gebrauch, wenn die Tankinnenauskleidung 15 auf dem Boden 4 des Tanks 1 liegt, deaktiviert und herausgezogen. Die Anbringung des Magneten 10 kann z.B. durch eine Teleskopstange, durch einen Roboter oder einen für diesen Gebrauch geeigneten Gegenstand erfolgen. Es kann auch mittels einer speziell dafür geformten Stange aus leichtem Material der Magnet 10 angebracht werden.

Bei dieser Weiterbildung werden, der Magnet bzw. die Magnete 10 oder ein Unterdruckelement an der / den Stirnwänden 6 angebracht und aktiviert. Schon beim Einbringen des / der Magneten 10 wird durch die am Magneten 10 befindliche Zugvorrichtung 22, 23 mit Umlenkvorrichtung 11 ein Seil oder Gurt 12 gezogen, dessen Enden aus dem Tank 1 am Dom 7 herausragen. An einem Ende dieses Seils 12 wird dieses an der Tankinnenauskleidung 15, die an der Spitze mit einem Befestigungsmechanismus 16 versehen ist, befestigt. Die Befestigung kann lösbar ausgeführt sein.

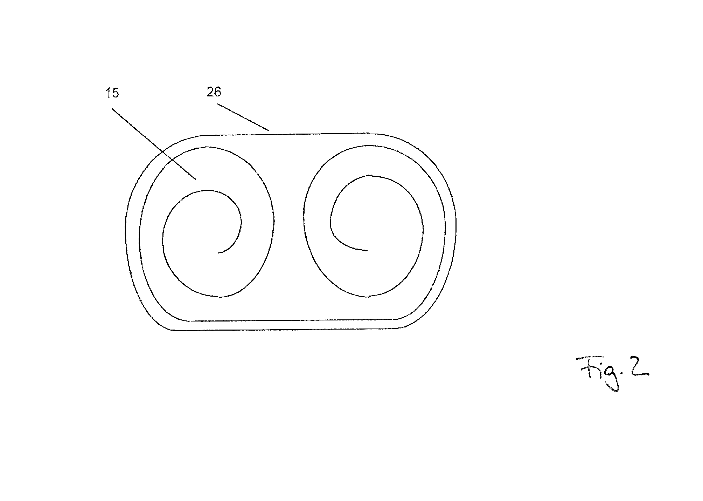

Die Tankinnenhülle 13 und die Zwischenlage 14 sind bereits durch Ineinanderlegen und beispielsweise zusätzliche Verbindungen miteinander zur Tankinnenauskleidung 15 verbunden. Jetzt wird sie, um sie durch den Dom 7 in den Tank 1 zu bekommen, in Längsrichtung von beiden Außenseiten nach Innen zusammen gefaltet oder gerollt. Sie bildet jetzt eine lange Rolle. Diese kann mit einer dünnen Folie 26 oder einem anderen, dem gleichen Zweck dienenden Material ummantelt sein. Dies ist in Fig. 2 dargestellt.

Die Tankinnenauskleidung 15 wird in den Tank 1 eingelassen. Dieses Einlassen geschieht sehr kontrolliert, damit Tankinnenhülle 13 und Zwischenlage 14 nicht beschädigt werden und damit sie am Tankboden richtig ausgerichtet werden können. Durch Ziehen des Seiles 12 wird die Tankinnenauskleidung 15 in Längsrichtung des Tanks 1 gezogen. Dabei gleitet die Tankinnenhülle 13 mit der Zwischenlage 14 über den Boden 4 oder auf einem Montagekissen 17, bis sie mit der Spitze der Rolle 16 den am dem Dom 7 gegenüberliegenden Stirnseite befindlichen Magneten 10 erreicht und geschlossen auf dem Boden 4 des Tanks 1 liegt.

Das Einziehen der Tankinnenauskleidung 15 erfolgt über die Zugvorrichtung 22, 23 mit Umlenkvorrichtung 11 am Magneten 10.

Sollten sich an beiden Seiten des Tanks ein Dom befinden, kann alternativ das Einziehen der Tankinnenauskleidung 15 auch über den zweiten Dom erfolgen. Dazu wird ein Zugseil 12 von einem Dom 7 zu dem anderen Dom (nicht dargestellt) im Tank befördert. Dies kann durch Luftströmung, durch Roboter, durch Werfen oder auf anderer Weise geschehen. Jetzt kann die Tankinnenauskleidung ähnlich wie vorher beschrieben in den Tank 1 eingezogen werden.

Nun beginnt ein kontrolliertes Aufblasen der Tankinnenauskleidung 15 durch einen vorher daran befestigten Schlauch, der aus dem Dom herausragt. Hierbei wird kontrolliert, dass die Tankinnenauskleidung 15, bestehend aus der Tankinnenhülle 13 und der Zwischenlage 14, sich glatt an die Tankwand 3 anlegt. Füllt die Tankinnenauskleidung 15 den Tank 1 komplett aus, wird diese am Dom 7 durch einen Dichtring am Domflansch 9 fest eingeklemmt. Es werden alle anderen Zubehörkomponenten der Leckschutzauskleidung angeschlossen. Nun kann durch Herstellen des Vakuums die Tankinnenauskleidung 15 an die Tankwand 1 herangezogen werden.

Eine weitere Möglichkeit der Einbringung der Tankinnenauskleidung 15 in einen Tank 1 ist die mittels eines Montagekissens 17. Ein Montagekissen 17 kann auch hilfreich sein, wenn sich im Tank 1 Verstärkungen oder sonstige Gegenstände, die in den Innenraum hineinragen, befinden und / oder der Boden des Tanks keine glatte Oberfläche bildet.

Je nach Tankgröße wird ein Montagekissen 17 mit einem daran befestigten Schlauch zum späteren Befüllen gefertigt. Das Montagekissen 17 muss in seiner Ausbildung so geformt sein, dass es durch den Dom 7 hindurch gesteckt werden kann. Des Weiteren sollen die Tankinnenhülle 13 und die Zwischenlage 14 sicher und geschützt in den Tank 1 eingebracht werden.

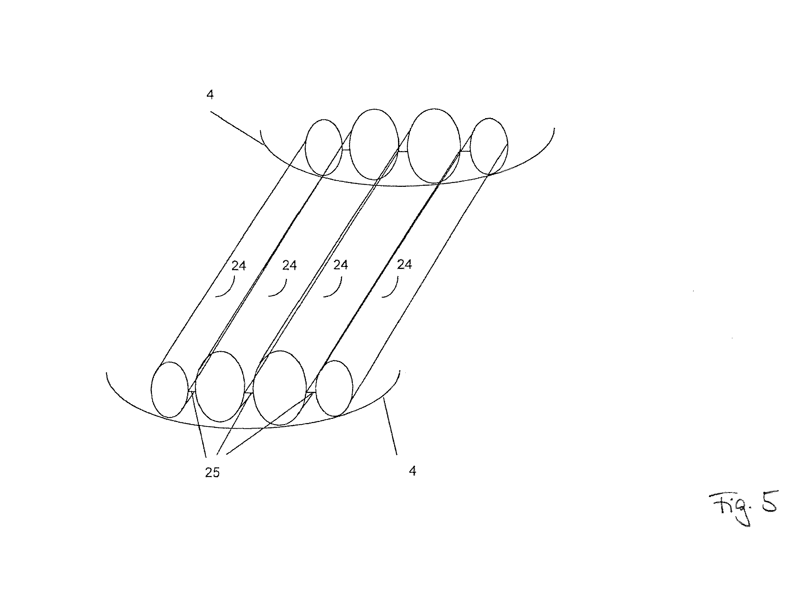

Das Montagekissen 17 wird aus einer Folie oder einem beschichtetem Gewebe gefertigt und hat zwei oder je nach Größe und Art der Konstruktion des Tanks 1 auch mehr oder weniger Kammern 24. Für jeden Tank 1 wird beispielsweise ein spezifisches Montagekissen 17 gefertigt. In Fig. 5 wird beispielhaft das Montagekissen 17 dargestellt.

Die Form des Montagekissens 17 besteht in diesem Beispiel aus vier nebeneinander liegenden Kammern 24. Die Kammern 24 sind in diesem Beispiel mit einer schmalen Folienfläche 25 miteinander verbunden. Im Ruhezustand liegen sie flach auf dem Boden 4, im Gebrauchszustand werden diese mit Luft oder anderen Medien befüllt, siehe Fig. 5.

Zur Nutzung des Montagekissens 17 wird das in Ruhestellung befindliche Montagekissen 17 in diesem Beispiel zu einer Rolle mit der Länge der kürzesten Seite des Montagekissens zusammengerollt. Diese hat maximal die Größe, dass sie durch den Dom 7 in den Tank 1 eingebracht werden kann. Auf dem Boden 4 des Tanks 1 wird das eingerollte Montagekissen 17 in diesem Beispiel so ausgerichtet, dass die Rolle quer zur Längsrichtung des Tanks 1 liegt. Dann wird sie in Gebrauchsstellung gebracht, indem die einzelnen Kammern 24 mit Luft oder einem anderen Medium gefüllt werden.

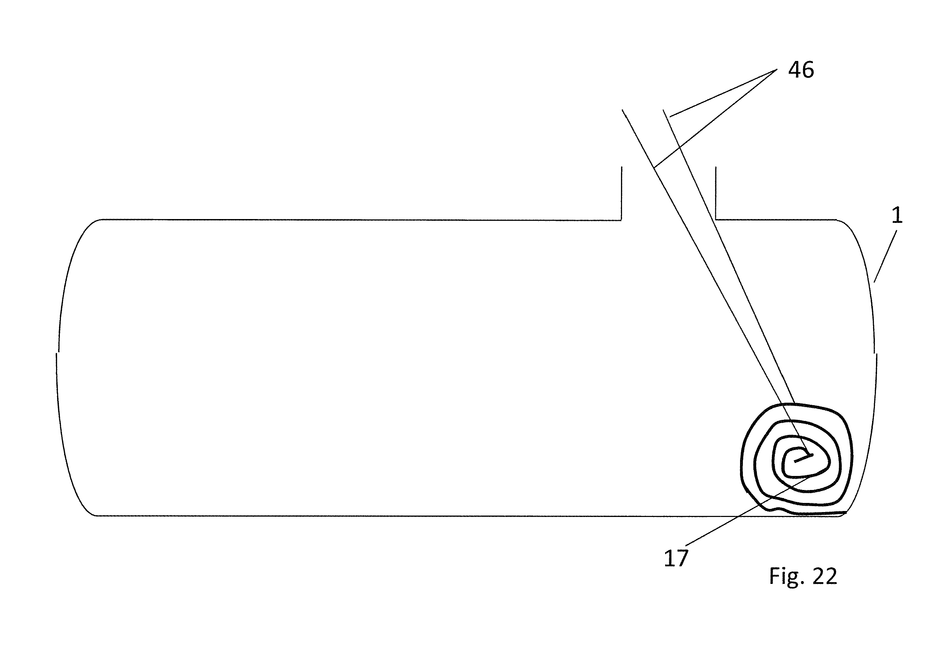

Zur Ausrichtung des Montagekissens 17 ist es in diesem Beispiel an verschiedenen Stellen mit sogenannten Ösen 18 bis 21 versehen, an denen jeweils ein Seil bzw. Gurt 12, 46 befestigt ist. Die Enden der Seile 12, 46 ragen aus dem Dom 7 heraus. Um das Montagekissen 17 in Gebrauchsstellung genau an die richtige Stelle am Boden 4 des Tanks 1 zu bringen, kann mittels der Seile 12, 46 das Montagekissen 17 in seiner Lage korrigiert und ausgerichtet werden (Fig. 22). Je nach Größe und Form des Tanks kann das Montagekissen mehr oder weniger Ösen oder die gleiche Funktion erfüllende Befestigungsmöglichkeiten an anderen Stellen haben. Vorteilhafterweise wird das Montagekissen 17 schon beim Aufblasen und Ausrollen mit Halte- und Ausrichtungsseilen 12, 46 ausgerichtet.

Es ist wichtig, dass das Montagekissen 17 an der richtigen Stelle im Tank 1 liegt. Das Ausrichten des Montagekissens 17 kann auch ohne Ösen geschehen, z. B. durch einen Stab, mit dem die Lage des Montagekissens 17 noch nach dem Aufblasen korrigiert werden kann.

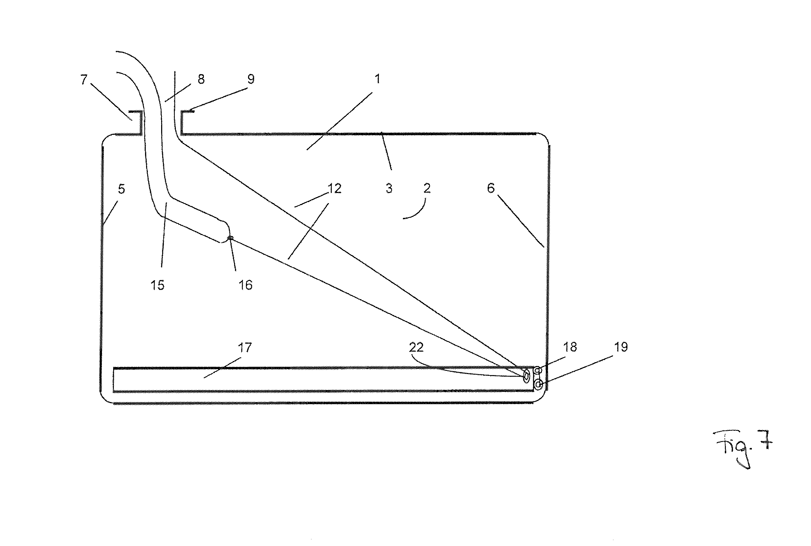

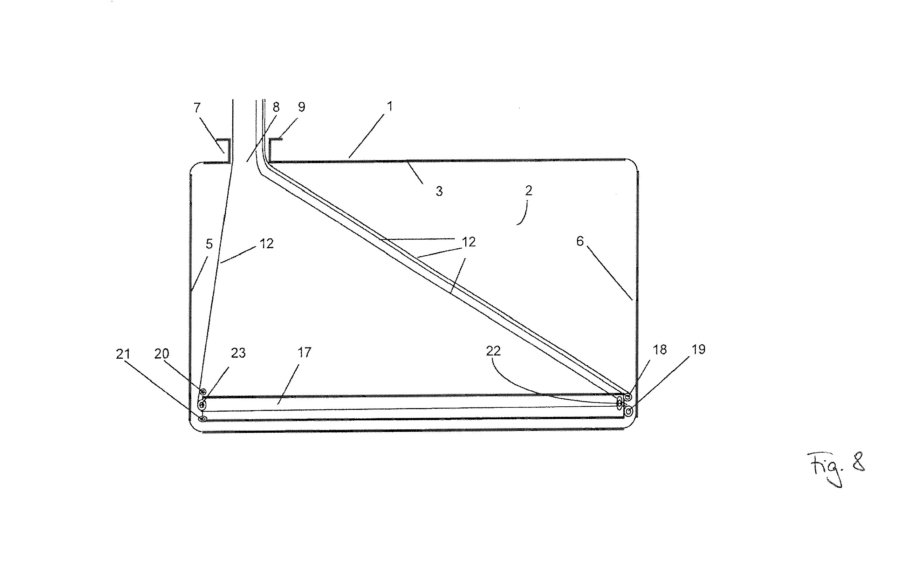

In der Mitte des dem Dom 7 gegenüberliegenden Ende des Montagekissens 17 in Fig. 7 ist eine Zugvorrichtung mit Umlenkvorrichtung 22 angebracht, durch die ein Seil 12 gezogen ist, dessen Enden aus dem Dom 7 herausragen. Ein Ende des Seiles 12 wird zum Einziehen der Tankinnenauskleidung 15 in den Tank 1 benötigt. Es kann, wie aus Fig. 8 ersichtlich, erforderlich sein, auch an dem Ende des Montagekissens 17 auf der Seite des Doms 7 eine zweite Zugvorrichtung mit Umlenkvorrichtung 23 anzubringen, durch die das Seil 12, welches durch die Zugvorrichtung mit Umlenkvorrichtung 22 am vorderen Teil des Montagekissens 17 durchgezogen ist, ebenfalls durchgezogen wird. Diese Ausstattung ist z.B. bei Tanks in der Größenordnung von mehr als 5 Metern Länge notwendig. In diesem Fall wird das Seil 12 sowohl über die Zugvorrichtung mit Umlenkvorrichtung 22, 23 vorne als auch hinten umgelenkt.

Ist das Montagekissen 17 in Gebrauchsstellung gebracht und die Kammern 24 über den Schlauch, der aus dem Dom herausragt, mit Luft oder einem anderen Medium gefüllt, wird mit dem Seil 12, welches durch die Zugvorrichtungen mit Umlenkvorrichtung 22, 23 an beiden Seiten des Montagekissens 17 läuft, die zu einer Rolle gerollte oder gefaltete Tankinnenauskleidung 15 eingezogen. Bei diesem Vorgang wird die Tankinnenauskleidung 15 sehr vorsichtig über den Rand des Doms 7 in den Tank 1 herabgelassen. Durch Ziehen mit dem Seil 12, wird die Tankinnenauskleidung 15 über das Montagekissen 17 bzw. über die Kammern 24 in Längsrichtung in den Tank 1 geführt. Ist die Tankinnenauskleidung 15 bis zum vorderen Ende des Montagekissens 17 eingezogen, so kann das Seil 12 herausgezogen oder gekappt werden. Auch der Schlauch zum Befüllen des Montagekissens wird herausgezogen oder gekappt.

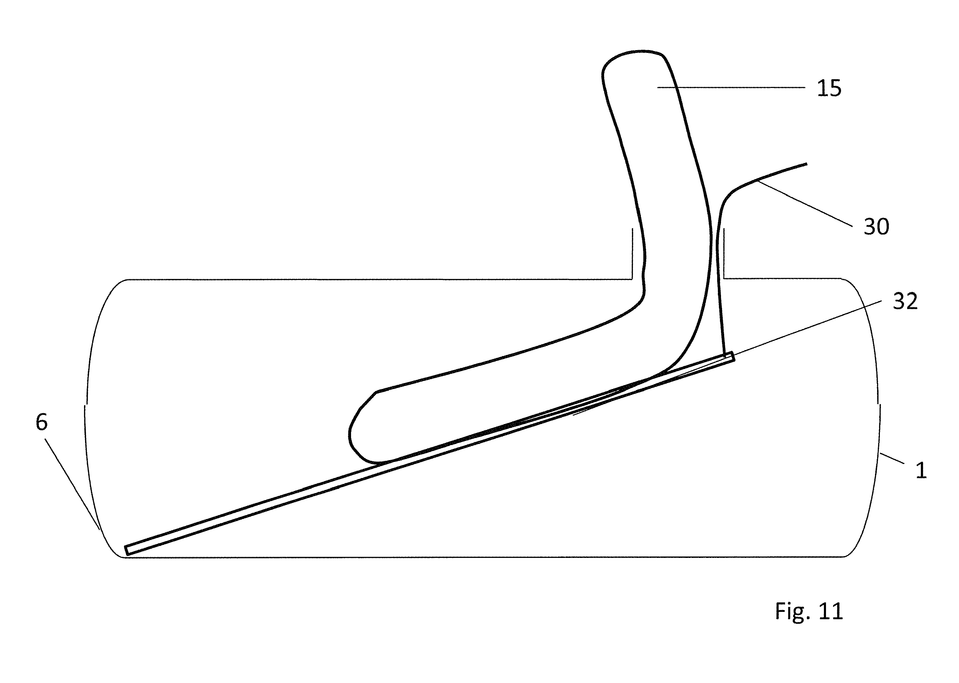

Alternativ kann beispielsweise die Tankinnenauskleidung 15 auch über eine Montagerutsche 32 in den Tank eingeführt werden. Die Montagerutsche kann aus Folie oder einem beschichtetem Gewerbe gefertigt werden oder aus anderen Werkstoffen wie beispielsweise Metall oder auch Werkstoffkombinationen hiervon. Die Montagerutsche 32 kann zum Einbringen in den Tank beispielsweise auch gerollt, gesteckt oder gefaltet werden und erst nach Einbringen in den Tank entrollt werden z. B. auch durch Aufblasen. Die Montagerutsche 32 kann angetriebene Rollen 33 haben. Die Tankinnenauskleidung 15 kann dann beispielsweise auf den angetriebenen Rollen 33 nach unten und hinten gleiten bzw. gedrückt werden. Die Rollen 33 können angetrieben sein z. B. über ein Antriebsseil 31. Die Tankinnenauskleidung 15 wird über die Rutsche 32 in den Tank bewegt (Fig. 11). Die Tankinnenauskleidung 15 wird anschließend auf dem Boden des Tanks abgelegt. Wichtig ist, dass die Tankinnenauskleidung 15 so ausgebracht wird, dass sie auf der tiefsten Stelle des Tanks liegt. Die Tankinnenauskleidung soll nicht verdreht sein. Des Weiteren sollte die Tankinnenauskleidung 15 bis fast zur Tankstirnseite 6 gegenüber dem Dom 7 ausgelegt werden. Dazu ist beim Herausziehen der Montagerutsche 32 darauf zu achten, dass die Tankinnenauskleidung 15 nicht wieder mit der Rutsche 32 in Richtung Dom 7 zurück rutscht. Hier können z. B. die Rollen oder eine andere vergleichbare Antriebseinheit helfen und die Hülle bei der Bewegung der Rutsche 32 zum Dom 7 in Richtung der Tankstirnseite 6 bewegen. So wird der Bewegung der Rutsche 32 aus dem Tank 1 hinaus entgegen gewirkt.

Es kann alternativ oder ergänzend an dem vom Dom abgewandten Klöpperboden ein Haltemechanismus installiert werden, der die Hülle am Zurückrutschen hindert.

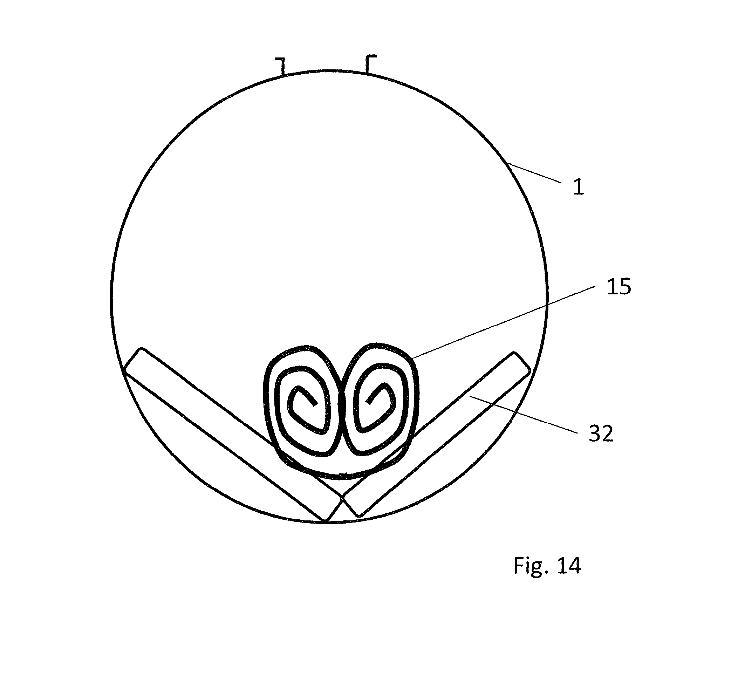

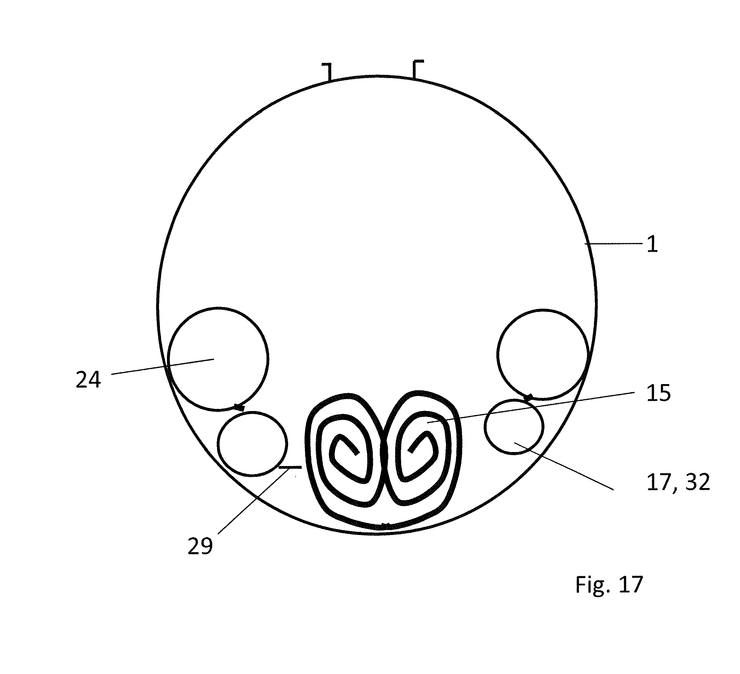

Eine andere Möglichkeit, die Montagerutsche 32 oder das Montagekissen 17 wieder aus dem Tank hinaus zu bekommen und trotzdem die ideale Lage der Tankinnenauskleidung 15 zu gewährleisten, ist das Montagekissen 17 bzw. die Montagerutsche 32 wie in Fig. 17 gezeigt zu teilen. Die beiden Teile werden während des Einbringens des Montagekissens 17 und der Tankinnenauskleidung 15 durch einen Haltemechanismus zusammen gehalten, welcher von außen gelöst werden kann. Dadurch kann das Montagekissen 17 geteilt werden. Beispielsweise ist die in Fig. 14 dargestellte V-förmige Montagrutsche 32 für eine geteilte Ausführung geeignet.

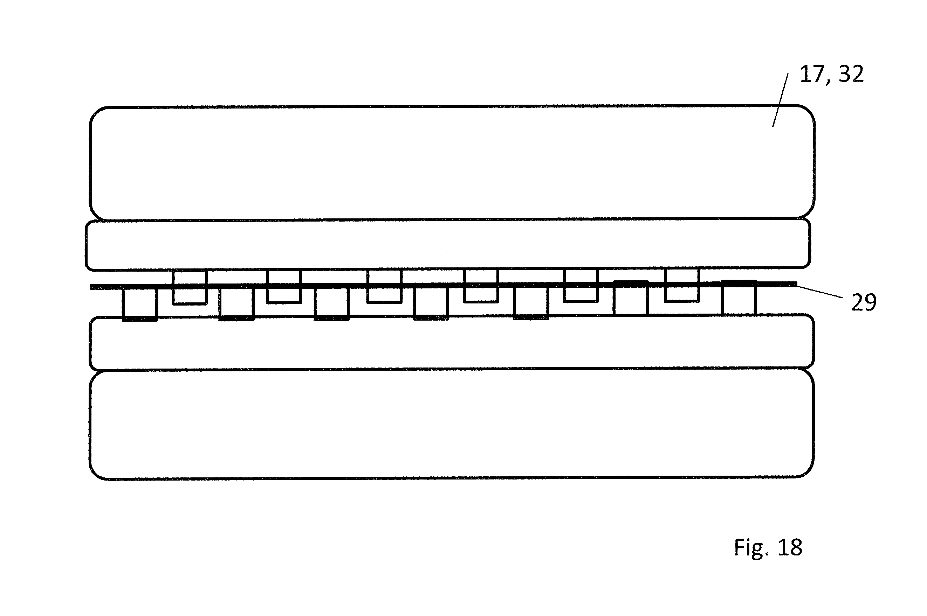

Der Haltemechanismus ist beispielhaft in Fig. 18 dargestellt. Es werden jeweils Laschen an dem Montagekissen 17 bzw. der Montagerutsche 32 angebracht. Durch die Laschen wird ein Gurt oder ein Seil gezogen. Sobald die Tankinnenauskleidung 15 über das Montagekissen 17 oder die Montagerutsche 32 in den Tank eingebracht worden ist, kann der Gurt aus den Laschen gezogen werden und die Tankinnenauskleidung 15 fällt zwischen das Montagekissen 17 oder die Montagerutsche 32. Die beiden Teile können dann aus dem Tank entfernt werden, so dass die Position der Tankinnenauskleidung weiterhin erhalten bleibt. Es kann auch ein Reißverschluss oder eine andere dem gleichen Zweck dienende Vorrichtung genutzt werden, damit die beiden Hälften nach dem Einbringen der Tankinnenauskleidung 15 getrennt werden können und so das Montagekissen 17 oder die Montagerutsche 32 in zwei oder mehr Teilen unter der Hülle herausgezogen werden können.

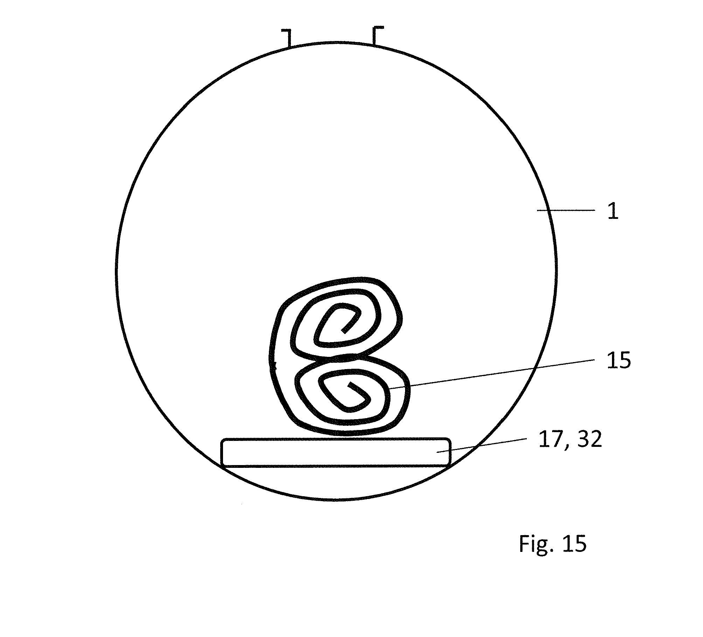

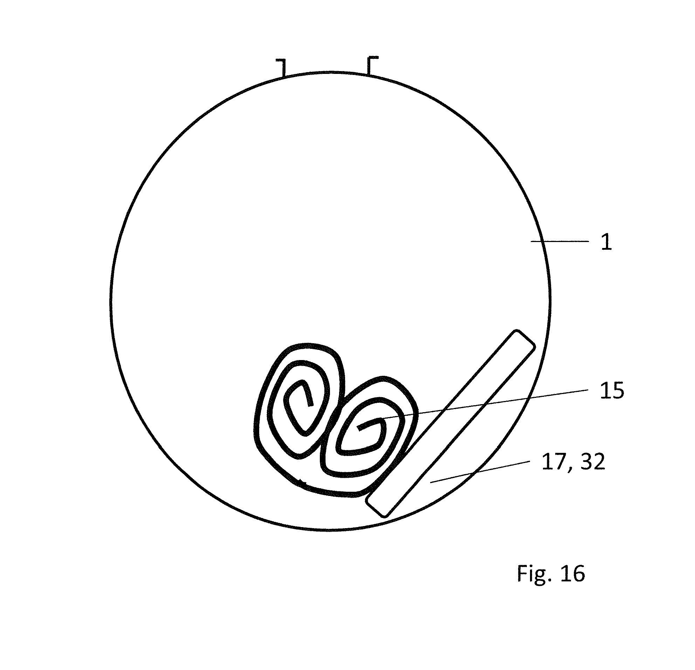

Eine weitere Fortbildung ist in den Fig. 15 und 16 dargestellt. Hier wird die Montagerutsche 32 weggeklappt und die Tankinnenauskleidung 15 fällt seitlich neben die Montagerutsche 32. Man kann die Drehung der Tankinnenauskleidung 15 durch das Wegklappen der Montagerutsche 32 schon beim Einbringen berücksichtigen. Dies wird aus Fig. 15 deutlich.

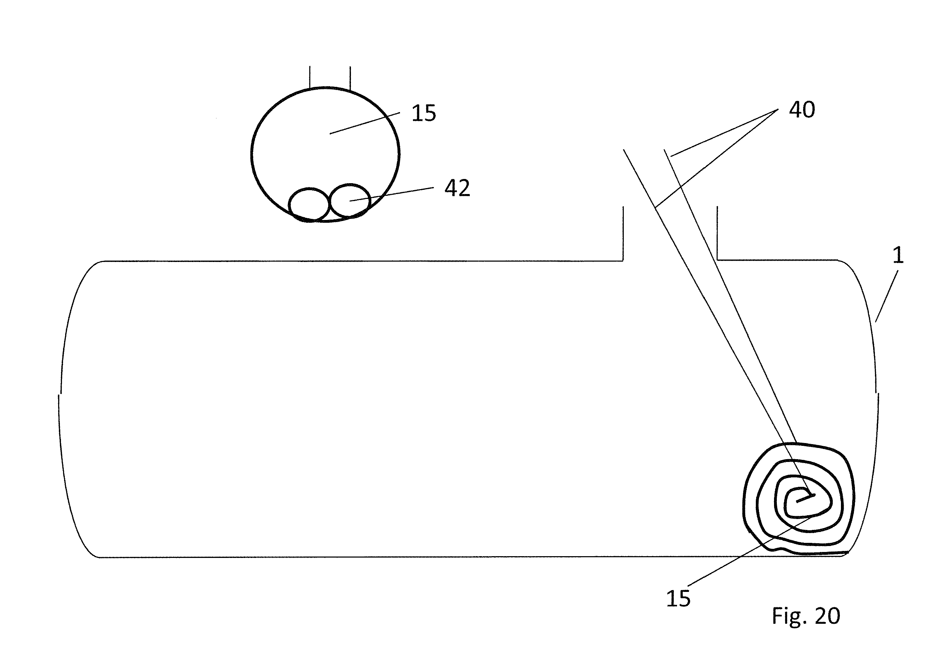

Eine Möglichkeit die Tankinnenauskleidung 15 ohne Montagekissen 17 oder Montagerutsche 32 im Tank zu installieren, ist die Tankinnenauskleidung 15 wie in der Fig. 20 gezeigt quer zu rollen. Diese Einbauart ist möglich, wenn die Tankinnenauskleidung 15 quer gerollt noch durch den Dom 7 passt. Die Rolle wird an zwei Halteseilen 40 befestigt, in den Tank 1 eingeführt und mit den Halteseilen 40 ausgerichtet. Jetzt kann die Tankinnenauskleidung 15 befüllt werden und rollt sich langsam über die Länge des Tanks aus und hebt sich dann bis zur Decke des Tanks. Das Ausrollen kann unterstützt werden, indem in den Boden der Tankinnenauskleidung 15 einen oder mehrere Luftschläuche 42 einschweißt und diese zuerst befüllt. Durch diese Luftschläuche 42 rollt sich die Tankinnenauskleidung 15 über die Länge des Tanks 1 aus und anschließend kann die Tankinnenhülle 13 befüllt werden.

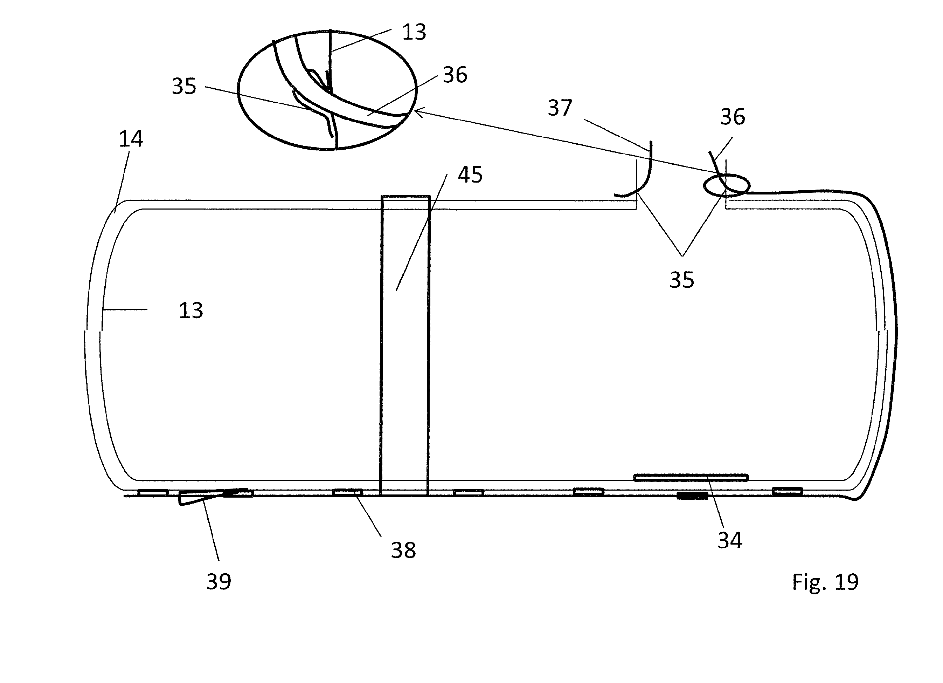

In Fig. 19 ist beispielhaft der Aufbau einer Tankinnenauskleidung 15 beschrieben. Die Auskleidung 15 hat eine Zugvorrichtung 39 an der Unterseite der aufgeblasenen Tankinnenauskleidung 15. Eine Saugleitung 36 ist an der gesamten Unterseite der Tankinnenauskleidung 15 mit einer Halterung für die Saugleitung 38, z. B. Laschen aus Vlies, befestigt. Eine Prallschutzmatte 34 ist bereits in die Auskleidung 15 gelegt und befestigt worden. Die Saugleitung 36 und eine Messleitung 37 sind mit Durchführungstüllen 35 im Hüllendom nach innen geführt. Der Vorteil ist, dass dadurch keine Bohrungen für die Durchführungsnippel im Tank 1 gemacht werden müssen. Die Tankinnenhülle 13 wird in die Zwischenlage 14 eingebracht. An dem Dom der Tankinnhülle 13 werden Haltegurte 41 befestigt oder eine Möglichkeit um Seile oder Haltegurte zu befestigen. Hiermit kann die Hülle beim Ausrichten im Tank am Dom nach oben gezogen werden kann, wodurch die Hülle besser ausgerichtet werden kann. Im Bereich von Verstärkungen im Tank und im Bereich von Stellen, die die Innenhülle schädigen könnten, wird außen auf die Zwischenlage 14 eine zusätzliche Zwischenlage oder ein anderes dem gleichen Zweck dienendes Verstärkungsmaterial befestigt, um die Innenhülle vor Beschädigungen zu schützen. Eine Auskleidung der Träger ist dann nicht mehr notwendig.

Zum Zusammenlegen der Tankinnenauskleidung 15 wird die Tankinnenhülle 13 in die Zwischenlage 14 gelegt und anschließend aufgeblasen. Im aufgeblasenen Zustand liegen Tankinnenhülle 13 und Zwischenlage 14 eng aneinander an. Jetzt wird die Auskleidung so gedreht, dass der Dom zur Decke ausgerichtet ist. Die Luft wird aus der Tankinnenhülle 13 heraus gelassen. Tankinnenhülle 13 und Zwischenlage 14 fallen zusammen. Der Dom sollte weiterhin möglichst in der Mitte der jetzt flach auf dem Boden liegenden Tankinnenauskleidung 15 sein. Jetzt wird die die Tankinnenauskleidung 15 an beiden längeren Seiten (längs zum Tank 1) jeweils zur Mitte hin eingerollt. Auf der Rolle werden deutliche Markierungen aufgebracht, die bei der späteren Montage im Tank helfen sollen, dass die Tankinnenauskleidung 15 weit genug, aber auch nicht zu weit in den Tank gezogen wird. Die Markierungen sollten von außerhalb des Doms 7, z. B. mit einer Kamera, sichtbar sein. Die Art der Rolle wird aus Fig. 17 deutlich. Die eng gerollte Einheit wird mit Haltemöglichkeiten befestigt, die von außerhalb des Tanks 1 lösbar sind. Beispielsweise können dies Klettstreifen sein, die mit einem Seil verbunden sind, welches so lang ist, dass es auch nach der Montage der Tankinnenauskleidung 15 nach außen geführt werden kann. An dem Seil wird dann gezogen, um die Klettstreifen zu öffnen. Vorteilhafterweise wird die Tankinnenauskleidung 15 so gefaltet, dass sie sich nach beim Aufblasen im Tank 1 gleichmäßig entfaltet.

Die Tankinnenauskleidung 15 kann zusätzlich noch in einen Foliensack verpackt werden. Der Sack kann evakuiert werden, wodurch sich die gesamte Tankinnenauskleidung 15 noch weiter zusammen presst und ihr Durchmesser verringert wird. Der Durchmesser der Tankinnenauskleidung 15 muss immer kleiner sein als der Domdurchmesser, da ansonsten die Einheit nicht in den Tank passt.

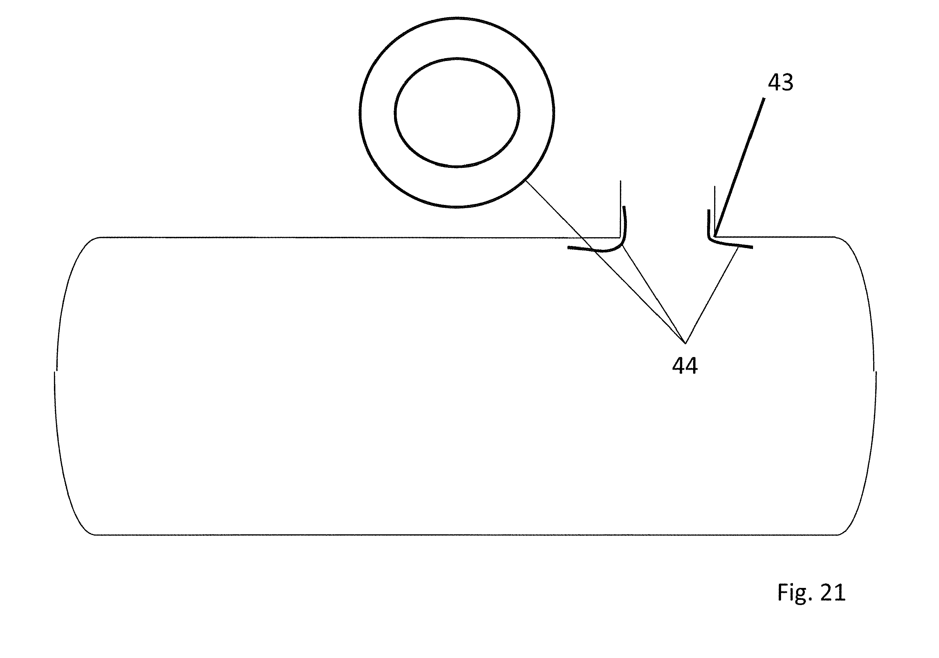

Um die Tankinnenhülle 13 vor Beschädigungen durch scharfe Kante zu schützen, wo der Dom 7 auf den Tank 1 geschweißt ist, wird aus dem Material der Zwischenlage 14 ein Domkragen 44 gefertigt. Dies ist in Fig. 21 dargestellt. Dieser Domkragen 44 kann vor dem Ausrichten der Tankinnenauskleidung gemäß Fig. 21 eingelegt werden.

Beim Befüllen der Tankinnenauskleidung 15 bleibt in diesem Fall das Montagekissen 17 am Boden 4 des Tanks 1 liegen. Gleichzeitig mit der Tankbefüllung wird die Luft bzw. das andere Medium aus den Kammern 24 des Montagekissens 17 herausgedrückt und dieses legt sich auf den Boden 4.

Alternativ kann das Montagekissen 15 oder die Montagerutsche 17 wieder wie oben beschrieben aus dem Tank entfernt werden.

Die in der vorstehenden Beschreibung, den Ansprüchen und den Figuren offenbarten Merkmale können sowohl einzeln als auch in beliebiger Kombination miteinander für die Verwirklichung der Erfindung relevant sein.

### Bezugszeichenliste:

- 1: Tank
- 2: Tankinnenraum
- 3: Tankinnenfläche
- 4: Tankboden
- 5: Tankstirnseite unter dem Dom
- 6: Tankstirnseite gegenüber dem Dom
- 7: Dom
- 8: Domöffnung
- 9: Domflansch
- 10: Magnet
- 11: Befestigungseinrichtung am Magneten
- 12: Zugseil oder -gurt
- 13: Tankinnenhülle
- 14: Zwischenlage
- 15: Tankinnenauskleidung
- 16: Befestigungsvorrichtung an der Spitze der Tankinnenauskleidung
- 17: Montagekissen
- 18: linke Öse an der Vorderseite des Montagekissens
- 19: rechte Öse an der Vorderseite des Montagekissens
- 20: linke Öse an der Hinterseite des Montagekissens
- 21: rechte Öse an der Hinterseite des Montagekissen
- 22: Zugvorrichtung mit Umlenkvorrichtung
- 23: weitere Zugvorrichtung mit Umlenkvorrichtung
- 24: Kammer des Montagekissens
- 25: Steg zwischen den Kammern des Montagekissens
- 26: Ummantelung
- 27: Schlitten
- 28: Zugvorrichtung mit Umlenkvorrichtung
- 29: Öffnungseinrichtung für Montagekissen oder Montagerutsche
- 30: Halteseil für Montagerutsche
- 31: Antriebsseil
- 32: Montagerutsche
- 33: Rollen
- 34: Prallschutzmatte
- 35: Durchführungstüllen
- 36: Saugleitung
- 37: Messleitung
- 38: Halterung für die Saugleitung
- 39: Befestigungsvorrichtung an der Unterseite der Tankinnenauskleidung
- 40: Halte- und Ausrichtungsseil
- 41: Haltegurt
- 42: Luftschlauch
- 43: Kante des Domansatz
- 44: Domkragen
- 45: Verstärkungslage
- 46: Zugseil bzw. -gurt

## Patentansprüche

1. Verfahren zum mannlosen Einbauen einer Tankinnenauskleidung (15) in einen Tank (1), mit folgenden Schritten:
- Bereitstellen des Tanks (1), der eine einen Innenbereich (2) umgebende Tankwand (3) und eine Tanköffnung (7) aufweist,
- Bereitstellen der Tankinnenauskleidung (15), die eine Innenhülle (13) und eine Zwischenlage (14) aufweist, und
- Auskleiden des Innenbereichs (2) des Tanks (1), wobei das Auskleiden ein Einführen der Tankinnenauskleidung (15) in den Innenbereich (2) des Tanks (1) durch die Tanköffnung (7) und ein Entfalten der Tankinnenauskleidung (15) im Innenbereich (2) des Tanks (1) umfasst und wobei im ausgekleideten Zustand die Zwischenlage (14) zwischen der Innenhülle (13) und der Tankwand (3) angeordnet ist und die Zwischenlage (14) zumindest abschnittsweise an der Tankwand (3) anliegt,
wobei die Tankinnenauskleidung (15) beim Auskleiden mit Unterstützung einer Einbauhilfseinrichtung in einem nicht entfalteten oder wenigstens teilweise entfalteten Zustand positioniert und / oder ausgerichtet wird.

2. Verfahren nach Anspruch 1, wobei die Tankinnenauskleidung (15) mittels einer Zugvorrichtung (22, 23) gezogen wird.

3. Verfahren nach Anspruch 2, wobei die Zugvorrichtung (22, 23) mit einer Magneteinrichtung (10) oder einer pneumatischen Vorrichtung gebildet ist, mittels der die Zugvorrichtung (22, 23) an einer Innenseite der Tankwand (3) befestigt wird.

4. Verfahren nach einem der vorangehenden Ansprüche, wobei vor dem Auskleiden ein Führungselement (17, 32) im Innenbereich (2) des Tanks (1) angeordnet wird und die Tankinnenauskleidung (15) beim Auskleiden des Tanks (1) entlang und/oder mittels des Führungselements (17) positioniert und / oder ausgerichtet wird.

5. Verfahren nach Anspruch 4, wobei das Führungselement (17, 32) ein aufblasbares Element ist, das zusammengerollt in den Innenbereich (2) des Tanks (1) eingeführt und dort mit einem Fluid gefüllt wird.

6. Verfahren nach Anspruch 4 oder 5, wobei an dem Führungselement (17, 32) die Zugvorrichtung (22, 23) gebildet ist.

7. Verfahren nach einem der Ansprüche 4 bis 6, wobei das Führungselement (17, 32) derart angeordnet wird, dass eine Führungsebene von der Tanköffnung (7) hin zu einer der Tanköffnung (7) gegenüberliegenden Seite des Innenbereichs (2) gebildet wird, und wobei die Tankinnenauskleidung (15) entlang der Führungsebene in den Innenbereich (2) des Tanks (1) eingeführt wird.

8. Verfahren nach einem der Ansprüche 4 bis 7, wobei an einer Oberseite des Führungselements (17, 32) angetriebene Rollen (33) gebildet sind, die eine Bewegung der Tankinnenauskleidung (15) entlang der Oberseite des Führungselements (17, 32) unterstützen.

9. Verfahren nach einem der Ansprüche 4 bis 8, wobei das Führungselement (17, 32) mehrteilig gebildet ist.

10. Verfahren nach Anspruch 9, wobei die mehreren Teile des Führungselements (17, 32) lösbar miteinander verbunden sind.

11. Tankinnenauskleidung (15), aufweisend eine Innenhülle (13), die von einer Zwischenlage (14) umgeben ist, und weiter aufweisend eine Befestigungseinrichtung (39) für eine Zugeinrichtung.

12. Tankinnenauskleidung (15) nach Anspruch 11, wobei an der Zwischenlage (14) eine Saugleitung (36) angeordnet ist.

13. Tankinnenauskleidung (15) nach Anspruch 11 oder 12, wobei die Innenhülle (13) und / oder die Zwischenlage (14) zumindest abschnittsweise verstärkt sind.

## Claims

1. A method for the unmanned installation of a tank inner lining (15) into a tank (1), with the following steps:
- providing the tank (1), which has a tank wall (3), surrounding an inner region (2), and a tank opening (7),
- providing the tank inner lining (15), which has an inner cover (13) and an intermediate layer (14), and
- lining the inner region (2) of the tank (1), wherein the lining comprises introducing the tank inner lining (15) into the inner region (2) of the tank (1) through the tank opening (7) and unfolding the tank inner lining (15) in the inner region (2) of the tank (1) and wherein in the lined state the intermediate layer (14) is arranged between the inner covering (13) and the tank wall (3) and the intermediate layer (14) lies at least in sections against the tank wall (3),
wherein during lining, the tank inner lining (15) is positioned and/or aligned in a non-unfolded or at least partially unfolded state with the assistance of an auxiliary installation device.

2. The method according to Claim 1, wherein the tank inner lining (15) is drawn by means of a drawing device (22, 23).

3. The method according to Claim 2, wherein the drawing device (22, 23) is formed with a magnet arrangement (10) or with a pneumatic device, by means of which the drawing device (22, 23) is fastened to an inner side of the tank wall (3)

4. The method according to one of the preceding claims, wherein before lining, a guide element (17, 32) is arranged in the inner region (2) of the tank (1) and the tank inner lining (15) during lining of the tank (1) is positioned and/or aligned along and/or by means of the guide element (17).

5. The method according to Claim 4, wherein the guide element (17, 32) is an inflatable element, which is introduced in rolled-up state into the inner region (2) of the tank (1) and is filled there with a fluid.

6. The method according to Claim 4 or 5, wherein the drawing device (22, 23) is formed on the guide element (17, 32).

7. The method according to one of Claims 4 to 6, wherein the guide element (17, 32) is arranged such that a guide plane is formed from the tank opening (7) to a side of the inner region (2) lying opposite the tank opening (7), and wherein the tank inner lining (15) is introduced along the guide plane into the inner region (2) of the tank (1).

8. The method according to one of Claims 4 to 7, wherein on an upper side of the guide element (17, 32) driven rollers (33) are formed, which assist a movement of the tank inner lining (15) along the upper side of the guide element (17, 32).

9. The method according to one of Claims 4 to 8, wherein the guide element (17, 32) is formed in several parts.

10. The method according to Claim 9, wherein the several parts of the guide element (17, 32) are detachably connected with one another.

11. A tank inner lining (15), having an inner covering (13), which is surrounded by an intermediate layer (14), and further having a fastening arrangement (39) for a drawing arrangement.

12. The tank inner lining (15) according to Claim 11, wherein a suction line (36) is arranged on the intermediate layer (14).

13. The tank inner lining (15) according to Claim 11 or 12, wherein the inner covering (13) and/or the intermediate layer (14) are reinforced at least in sections.

## Revendications

1. Procédé destiné à la mise en place sans intervention humaine d'un revêtement intérieur de réservoir (15) dans un réservoir (1), avec les étapes suivantes :
- préparation du réservoir (1), qui comporte une paroi de réservoir (3) entourant une zone intérieure (2) et une ouverture de réservoir (7),
- préparation du revêtement intérieur de réservoir (15), qui comporte une enveloppe intérieure (13) et une couche intermédiaire (14), et
- opération de revêtement de la zone intérieure (2) du réservoir (1), l'opération de revêtement comportant une introduction du revêtement intérieure de réservoir (15) dans la zone intérieure (2) du réservoir (1) par l'ouverture de réservoir (7) et un dépliage du revêtement intérieur de réservoir (15) dans la zone intérieure (2) du réservoir (1) et la couche intermédiaire (14) étant dépliée à l'état revêtu entre l'enveloppe intérieure (13) et la paroi de réservoir (3)et la couche intermédiaire (14) venant au moins en partie en appui sur la paroi de réservoir (3),
pour lequel le revêtement intérieur de réservoir (15) est, lors de l'opération de revêtement, positionné et/ou orienté dans un état non déplié ou au moins partiellement déplié avec l'aide d'un dispositif auxiliaire de mise en place.

2. Procédé selon la revendication 1, pour lequel le revêtement intérieur de réservoir (15) est tiré au moyen d'un dispositif de traction (22, 23).

3. Procédé selon la revendication 2, pour lequel le dispositif de traction (22, 23) est formé avec un dispositif magnétique (10) ou un dispositif pneumatique au moyen duquel le dispositif de traction (22, 23) est fixé à un côté intérieur de la paroi de réservoir (3).

4. Procédé selon l'une quelconque des revendications précédentes, pour lequel un élément de guidage (17, 32) est disposé avant le revêtement dans une zone intérieure (2) du réservoir (1) et le revêtement intérieur de réservoir (15) est positionné et/ou orienté le long et/ou à l'aide de l'élément de guidage (17) lors du revêtement du réservoir (1).

5. Procédé selon la revendication 4, pour lequel l'élément de guidage (17, 32) est un élément gonflable qui est introduit enroulé dans la zone intérieure (2) du réservoir (1) et y est rempli d'un fluide.

6. Procédé selon la revendication 4 ou 5, pour lequel le dispositif de traction (22, 23) est formé sur l'élément de guidage (17, 32).

7. Procédé selon l'une quelconque des revendications 4 à 6, pour lequel l'élément de guidage (17, 32) est disposé de telle sorte qu'un plan de guidage est formé depuis l'ouverture de réservoir (7) jusqu'à un côté opposé à l'ouverture de réservoir (7) de la zone intérieure (2), et pour lequel le revêtement intérieur de réservoir (15) est introduit le long du plan de guidage dans la zone intérieure (2) du réservoir (1).

8. Procédé selon l'une quelconque des revendications 4 à 7, pour lequel des rouleaux entraînés (33) sont formés sur une face supérieure de l'élément de guidage (17, 32) qui assistent un mouvement du revêtement intérieur de réservoir (15) le long de la face supérieure de l'élément de guidage (17, 32).

9. Procédé selon l'une quelconque des revendications 4 à 8, pour lequel l'élément de guidage (17, 32) est formé de plusieurs parties.

10. Procédé selon la revendication 9, pour lequel les parties multiples de l'élément de guidage (17, 32) sont reliées entre elles de façon amovible.

11. Revêtement intérieur de réservoir (15) comportant une enveloppe intérieure (13) qui est entourée d'une couche intermédiaire (14), et comportant en plus un système de fixation (39) pour un dispositif de traction.

12. Revêtement intérieur de réservoir (15) selon la revendication 11, pour lequel une conduite d'aspiration (36) est disposée sur la couche intermédiaire (14).

13. Revêtement intérieur de réservoir (15) selon la revendication 11 ou 12, pour lequel l'enveloppe intérieure (13) et/ou la couche intermédiaire (14) sont renforcées au moins par secteur.
